# EUROPEAN PATENT APPLICATION

(11) **EP 4 659 986 A1**
(43) Date of publication of application: **10.12.2025**
(21) Application number: 25177198.6
(22) Date of filing: 19.05.2025
(51) Int. Cl.: B60L 1/00, B60L 58/10, B60L 58/20, B60L 58/21, B60R 16/033, F02N 11/04, F02N 11/08, H02J 7/00, H02J 7/34, B60L 3/00

(54) **BATTERY ISOLATION MODULE**

(30) Priority: 07.06.2024 US 202463657326 P; 14.05.2025 US 202519207926
(71) Applicant: Aptiv Technologies AG, 8200 Schaffhausen (CH)
(72) Inventor: CAPUTO, John, 8200 Schaffhausen (CH); VALADEZ, Jose, 8200 Schaffhausen (CH)
(74) Representative: Bardehle Pagenberg Partnerschaft mbB Patentanwälte Rechtsanwälte

(57) **Abstract**

The present invention relates to a battery isolation module (100) having an electronically controlled switch (102), a sensor (108), and an electronic controller (110). The sensor (108) is configured to detect a first voltage from a first voltage bus (104) and a second voltage from a distinct second voltage bus (106). The electronic controller (110), in communication with both the electronically controlled switch (102) and the sensor (108), is designed to couple and decouple the first and second voltage buses (104, 10-6) through the electronically controlled switch (102). This operation is based on the voltage difference detected between the first and second voltages by the sensor (108), thereby enabling efficient management of electrical connections between distinct voltage buses.

## Description

The subject matter disclosed herein relates to an electrical power distribution module for hybrid electric vehicles and, in particular, to an electrical distribution module integrating a battery isolation module for hybrid electric vehicles (HEVs).

Current vehicle electrical architectures in HEVs require that the vehicle's main voltage bus, which powers the majority of the vehicle's electrical system, remains stable and typically within a range of 9 to 16 volts to prevent an interruption to function of any of the electronic devices on the vehicle's main voltage bus. The main voltage bus is stabilized and powered by a main battery and/or a DC/DC convertor connected to the high voltage battery that powers the electric propulsion motor of the HEV. HEVs may also have a separate starter voltage bus powered by a separate starter battery that is configured to power the electric starter motor of the HEVs Internal combustion engine (ICE). It is desirable to interconnect the starter voltage bus to the main voltage bus to allow the starter battery to supply additional electrical power for momentary high power draws on the main voltage bus, for example from an electric power steering system and to recharge the starter battery from the main voltage bus.

To ensure that the main voltage bus remains stable during engine cranking that may pull down the electrical bus voltage, the starter voltage bus is temporarily disconnected from the main voltage bus by an electrical module, typically referred to as a battery interruption module (BIM) or battery isolation box (BIB), while the starter motor is engaged as it starts the ICE. After the engine cranking event concludes, the BIM may reconnect the starter voltage bus to the main voltage bus. The disconnection and reconnection the starter voltage bus and the main voltage bus by the BIM may be due to signals received from the HEV's powertrain control module (PCM) or other domain controller. The BIM also may provide status and feedback of its internal diagnostics including current through the BIM, voltage drop across the BIM, operating temperature of the BIM and any internal fault states that may exist. The BIM may in addition support ISO26262 Automotive Functional Safety goals for the prevention of main voltage undervoltage that may affect critical safety related features such as steering, braking, etc.

To prevent undesirable current flow from the main voltage bus to the starter voltage bus, the BIM may include high current diodes, e.g., Schottky diodes, to handle a fault condition to ensure that the BIM is connecting the main voltage bus to the starter voltage bus to support key-off loads or as a primary source of bulk current. These high current diodes are bulky, costly, difficult to mount, and have a high heat dissipation rate when conducting.

In some aspects, the techniques described herein relate to an electronic module including an electronically controlled switch configured to couple and decouple a first voltage bus and a second voltage bus distinct from the first voltage bus, a sensor configured to detect a first voltage of the first voltage bus and a second voltage of the second voltage bus, and an electronic controller in communication with the electronically controlled switch and the sensor. The electronic controller configured to command the electronically controlled switch to couple or decouple the first voltage bus, and the second voltage bus based on a voltage difference between the first voltage and the second voltage detected by the sensor.

In some aspects, the techniques described herein relate to a hybrid electric vehicle powertrain including a first voltage bus having a first electrical power supply and a starter motor. The hybrid electric vehicle powertrain also has a second voltage bus distinct from the first voltage bus which has a second electrical power supply and a plurality of electrical loads. The hybrid electric vehicle powertrain further includes a battery isolation module that is configured to couple and decouple the first voltage bus and the second voltage bus based on a voltage difference between the first voltage bus and the second voltage bus.

Embodiments of the present invention will now be described by way of example with reference to the accompanying drawings, in which:
**FIG. 1** shows a schematic block diagram of a battery isolation module according to some embodiments.
**FIG. 2** shows a schematic block diagram of a vehicle electrical system including the battery isolation module according to some embodiments.
**FIG. 3** shows an exploded view of an electrical power distribution module including the battery isolation module according to some embodiments.
**FIG. 4** shows a top isometric view of the battery isolation module of **FIG. 3** according to some embodiments.
**FIG. 5** shows a bottom isometric view of the battery isolation module of **FIG. 3** according to some embodiments.
**FIG. 6** shows a cut-away view of the electrical power distribution module of **FIG. 3** including the battery isolation module according to some embodiments.

The battery isolation module (BIM) presented herein is designed to reduce cost, component count, manufacturing complexity and improve thermal performance of BIMs. The BIM in this disclosure replaces large high power diodes, e.g. Schottky diodes, used in prior battery isolation modules with an electronic switch and sensor, e.g. metal-oxide silicon field effect transistors (MOSFETs), as an ideal diode controller.

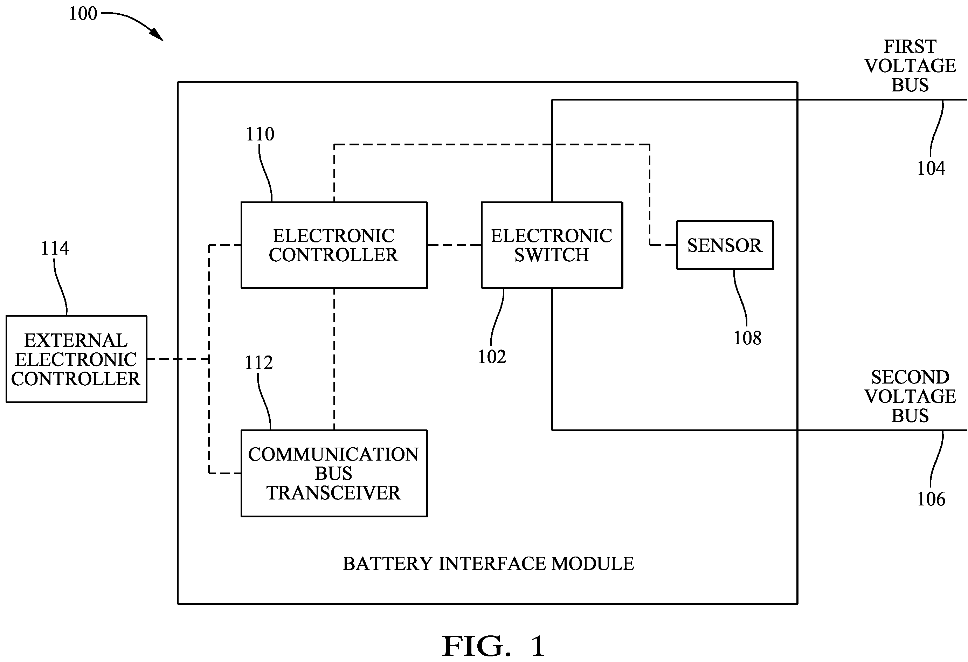

**FIG. 1** shows a schematic diagram of a BIM 100. The BIM 100 includes an electronically controlled switch, hereafter referred to as the switch 102, e.g., a bank of metal-oxide-silicon field effect transistors (MOSFETs), configured to connect and disconnect a first voltage bus 104 and a second voltage bus 106. The BIM also includes a sensor 108 connected to both the first voltage bus 104 and a second voltage bus 106 which is configured to determine the voltage of both of the voltage busses 104, 106. The BIM further includes an electronic controller 110 which is in electronic communication with the sensor 108 as indicated by the dashed line in FIG. 1. The electronic controller 110 has one or more processors and memory. The processors may be microprocessors, application specific integrated circuits (ASIC), or built from discrete logic and timing circuits (not shown). Software instructions that program the processors may be stored in a non-volatile memory device (not shown). The memory device may be contained within the microprocessor or ASIC. Alternatively, the memory device may be a separate device. Nonlimiting examples of the types of memory device that may be used include, but are not limited to, electrically erasable programmable read only memory (EEPROM), masked read only memory (ROM), flash memory, and solid state memory devices. The sensor 108 is configured to determine a first voltage of the first voltage bus 104 and a second voltage of the second voltage bus 106.

The electronic controller 110 is configured to turn the switch 102 on, thereby electrically coupling the first voltage bus 104 to the second voltage bus 106 and is configured to turn the switch 102 off, thereby electrically decoupling the first voltage bus 104 from the second voltage bus 106.

The BIM additionally includes a communication bus transceiver 112 that is in electronic communication with the electronic controller 110 and an external electronic controller 114, such a controller in a powertrain control module (PCM), thereby providing an electronic communication path between the electronic controller 110 and the external electronic controller 114. The communication bus transceiver 112 may support any one a known communication protocols, such as Local Interconnect Network (LIN) or Controller Area Network (CAN) communication protocols. The electronic controller 110 may receive messages from the external electronic controller 114 to turn the switch 102 on or off via the communication bus transceiver 112 from the external electronic controller 114 to turn the switch 102 on or off via the communication bus transceiver 112 and/or the electronic controller 110 may receive signals, such as pulse width modulated (PWM) signals directly from the external electronic controller 114 to turn the switch 102 on or off via a separate electronic signal path.

The electronic controller 110 is further configured to turn the switch 102 on, thereby electrically coupling the first voltage bus 104 to the second voltage bus 106 and is configured to turn the switch 102 off, thereby electrically decoupling the first voltage bus 104 from the second voltage bus 106 based on a voltage difference between the first voltage and the second voltage detected by the sensor 108. In order to address fault conditions, the electronic controller 110 may be configured to command the switch 102 to electrically couple the first voltage bus 104 and the second voltage bus 106 when the first voltage is greater than or equal to the second voltage, thereby allowing current to flow between the first and second voltage busses 104, 106 and may be configured to command the switch to decouple the first voltage bus 104 from the second voltage bus 106 when the first voltage is less than the second voltage, thereby preventing current from flowing from the second voltage bus 106 to the first voltage bus 104.

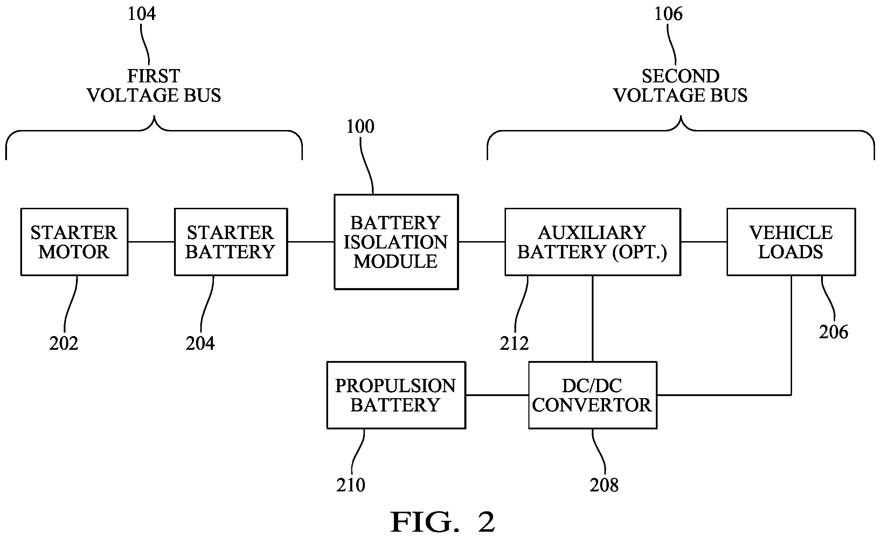

**FIG. 2** shows a schematic diagram of an electrical system of an HEV with the first voltage bus 104 connected to the second voltage bus by the BIM 100. The first voltage bus 104 includes a starter motor 202 for the ICE of the HEV and a starter battery 204 configured to provide electrical power to the starter motor 202. The second voltage bus 106 includes the vehicle's electrical loads 206, such as electronic modules, sensors, actuators, lighting system, infotainment system, etc., and a DC/DC convertor 208 configured to provide electrical power to the electrical loads 206 from a propulsion battery 210 configured to power the HEV's propulsion motor (not shown). The second voltage bus 106 may optionally include an auxiliary battery 212 configured to temporarily provide electrical power when the power requirements of the vehicle loads 206 exceed the capability of the Dc/DC convertor 208.

The switch 102 is configured to conduct battery charging currents as well as current from the starter battery 204 to the vehicle loads 206 during a key-off state and during peak current demand during vehicle operation where the DC/DC convertor 208 and/or auxiliary battery 212 are unable to support the current demand by themselves.

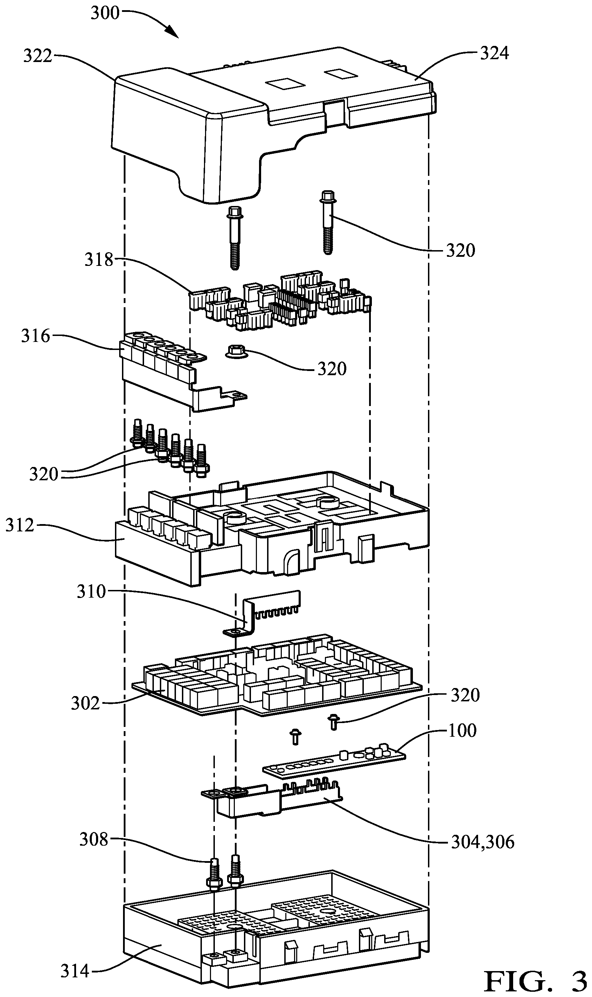

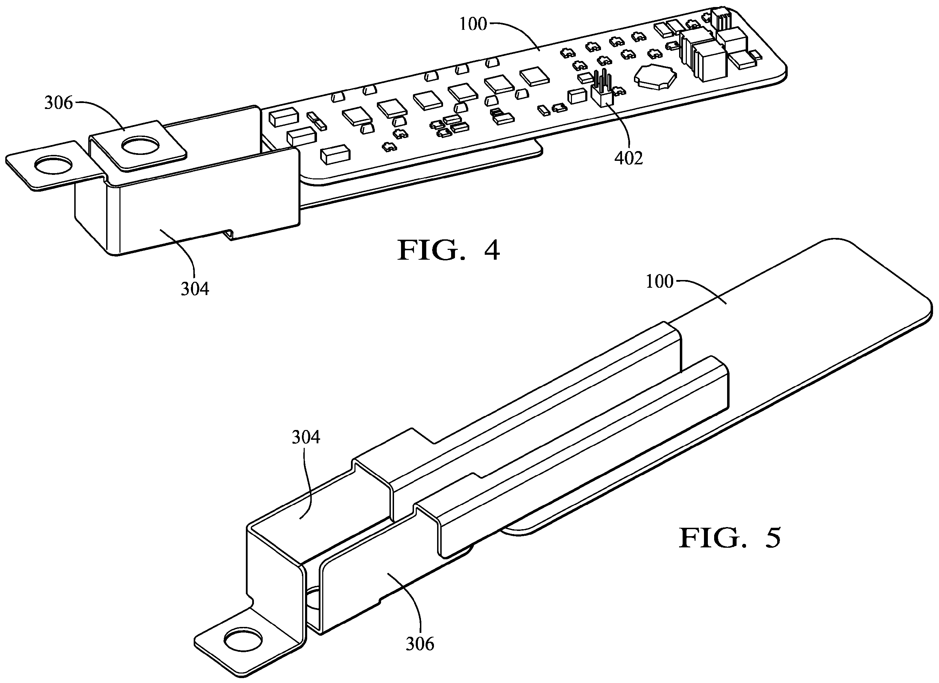

**FIG. 3** shows an exploded view of a power distribution module, also known as a power distribution box, hereafter referred to as the PDM 300 in which the BIM 100 is housed. The PDM 300 contains circuit protection devices, such as fuses and circuit breakers between the vehicle loads 206 and the second voltage bus 106. As shown in Fig. 3, the PDM includes the BIM 100, a printed circuit board assembly (PCBA) 302 to which the BIM 100 is attached by BIM bus bars 304, 306 and a signal connector 402, see **FIG. 4****.** The BIM bus bars 304, 306 are attached to terminals 308. The PCBA 302 also includes a PCB bus bar 310 the which feeds the second voltage bus 106. The PCBA and BIM are contained within an upper housing 312 and a lower housing 314. The PDM additionally includes a master fuse 316 connected to PCB bus bar 310 and replaceable fuses 318 which feed individual vehicle loads from the PCB bus bar 310. The PDM further includes a cover 322 enclosing the fuses 316, 318 within the upper housing 312, and fasteners 320 securing the components of the PDM 300 together. The PDM 300 may also include a tether 324 to retain the cover 322 to the upper housing 312.

**FIG. 4 and 5** show bottom and top isometric views respectively of the BIM 100 with the BIM bus bars 304, 306 attached and the signal connector 402.

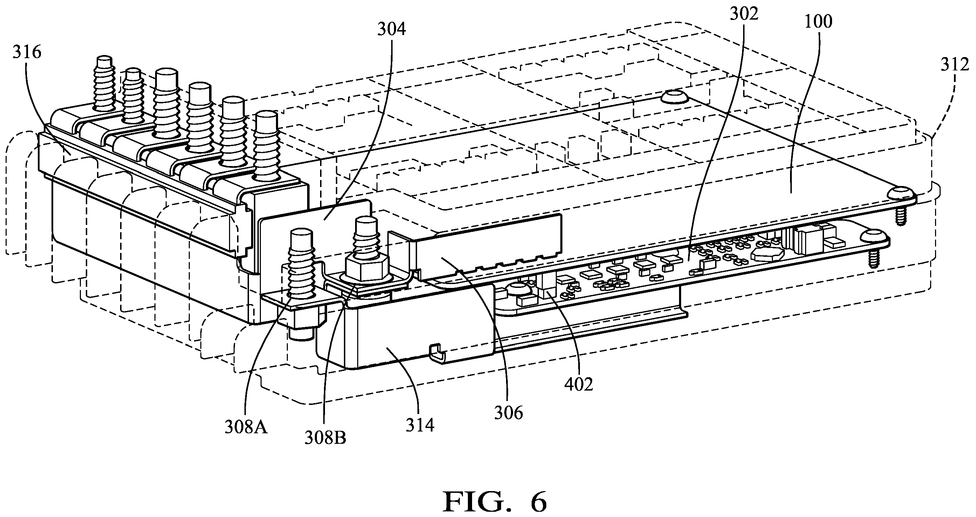

**FIG. 6** shows a cut-away isometric view of the PDM 300 with the BIM 100 connected to the PCBA 302 by the signal connector 402. The BIM bus bar 304 is connected to the first voltage bus 104 by terminal 308A and the BIM bus bar 306 is connected to the master fuse 316 via terminal 308B.

As shown in FIG. 6, the BIM 100 is packaged in the PDM 300 as a separate printed circuit board (PCB) subassembly. The separate PCB subassembly allows the BIM 100 to be protected inside the PDM housings 312, 314 and allows a reduction in the number of interconnections between the PDM 300, the master fuse 316, and the BIM 100, thereby simplifying the vehicle assembly process. For vehicle applications that are not HEVs, the BIM PCB subassembly can easily be depopulated from the PDM 300 since the BIM's features are not needed in those applications. This allows the PDM 300 to be assembled without an electronic controller of its own. The BIM 100 is self-contained on its separate PCB subassembly. The BIM 100 may be packaged in the PDM 300 as a separate standalone printed circuit board assembly that can be co-packaged with a traditional (non-electronic) PDM. The BIM 100 can be depopulated from the PDM 300 for vehicles that are not HEVs, allowing a common PDM 300 to be used in both HEV and IC vehicles.

There may be multiple internal diagnostics devices in the BIM 100 that monitor the electrical current through the BIM 100, monitor the control voltages at the switch 102, monitor the MOSFET gate driver health of the switch 102, as well as monitor the voltage levels of both the first and second voltage busses 104, 106. The BIM 100 may use these internal diagnostics devices to determine if the gate control circuit for the switch 102 is operating nominally and to determine if the gate voltage is in the proper range to avoid potential linear operation. The internal diagnostics devices may also monitor the voltage of the starter battery 204, the auxiliary battery 212, and/or DC/DC convertor 208. The BIM 100 may not turn the switch 102 on from an off condition if the voltages of the starter battery 204 and the auxiliary battery 212 are less than 6 volts because that may be indicative of a short circuit, thereby avoiding the creation of a short circuit condition for the BIM 100.

The electronic controller 110 may monitor the current flow through the BIM 100 and if the switch 102 is off, the electronic controller 110 may be overridden by the sensor 108 to allow current to flow through the switch 102 as long as the current flow is from the starter battery 204 and to the vehicle loads 206. If the polarity of the current flips, the sensor 108 may release control of the switch 102 to the electronic controller 110 which may turn off the switch 102, thereby blocking the current flow in the undesirable direction. The MOSFETs in the switch 102 provide a lower power dissipation since the MOSFETs have a lower forward voltage drop than a Schottky diode. The MOSFETs also have a low on-state resistance allowing them to carry more current with lower power dissipation. Further, the MOSFETs are smaller in size, and may be of the same type already used in the BIM for the main switch, thereby reducing the component diversity in the BIM and allowing the use of a traditional electrical component manufacturing process instead of a nut and bolt mounting required for the Schottky diodes. The MOSFETs are less expensive and have a smaller footprint than Schottky diodes, thereby providing further packaging advantages.

In an alternative embodiment, the BIM may be integrated into the PDM which allow the BIM to leverage an electronic controller of PDM, thereby eliminating the need for a standalone electronic controller in the BIM. The sharing of PDMs electronic controller also allows the BIM to communicate via a controller area network flexible data rate communication bus (CAN FD) built into the PDM or it can use a local interface network bus (LIN) to communicate the BIM status to the powertrain control module (PCM). The integration also eliminates a separate power input protection circuit that would be needed for the BIM and leverages the existing PCB in the PDB. It may also provide an optimal location for the BIM's MOSFET switch array in the switch.

In yet another alternative embodiment of the BIM, MOSFET array of the switch 102 and/or the sensor 108 may be integrated with the BIM gate control circuit. This embodiment would further improve the packaging and cost for the overall system.

### Discussion of Possible Embodiments

The following are non-exclusive descriptions of possible embodiments of the present invention.

In some aspects, the techniques described herein relate to an electronic module, including: an electronically controlled switch; a sensor configured to detect a first voltage of a first voltage bus and a second voltage of a second voltage bus distinct from the first voltage bus; and an electronic controller in communication with the electronically controlled switch and the sensor, the electronic controller configured to couple and decouple the first voltage bus and the second voltage bus via the electronically controlled switch based on a voltage difference between the first voltage and the second voltage detected by the sensor.

The electronic module of the preceding paragraph can optionally include, additionally and/or alternatively any, one or more of the following features/steps, configurations and/or additional components.

For example, the electronic controller may be configured to command the electronically controlled switch to couple the first voltage bus and the second voltage bus when the first voltage is greater than or equal to the second voltage and may be configured to decouple the first voltage bus from the second voltage bus via the electronically controlled switch when the first voltage is less than the second voltage.

For example, the electronic controller, in cooperation with the sensor, may cause the electronically controlled switch to prevent current from flowing from the second voltage bus to the first voltage bus.

For example, the electronic controller may be configured to command the electronically controlled switch to couple the first voltage bus to the second voltage bus in response to a first signal received from an external electronic controller and the electronic controller may be configured to command the electronically controlled switch to decouple the first voltage bus from the second voltage bus in response to a second signal received from the external electronic controller.

For example, the external electronic controller may be a component of a powertrain control module (PCM).

For example, the first signal and the second signal may be pulse width modulated (PWM) signals received from the external electronic controller.

For example, the electronic module may further include a communication bus transceiver in communication with the electronic controller configured to allow electronic communication between the electronic controller and the external electronic controller.

For example, the first signal and the second signal may be received from the external electronic controller via the communication bus transceiver.

For example, the communication bus transceiver may support Local Interconnect Network (LIN) communication protocols and or Controller Area Network (CAN) communication protocols.

For example, a powertrain control module may include the external electronic controller.

For example, the electronically controlled switch may include a metal-oxide-silicon field effect transistor (MOSFET).

For example, the electronically controlled switch may include an integrated gate bipolar transistor (IGBT).

For example, the electronic module includes a battery isolation module. The first voltage bus may be supplied by a first battery having the first voltage and the second voltage bus may be supplied by a second battery having the second voltage.

For example, the first voltage bus may be supplied by a first battery having the first voltage and the second voltage bus may be supplied by a DC/DC convertor having the second voltage.

For example, the first voltage bus may be electrically coupled with a starter motor of an internal combustion engine and the first battery may be configured to supply electrical power to the starter motor.

For example, the electronic module may be configured to be incorporated within an electrical power distribution center which further includes electrical fuses electrically coupled with the first voltage bus or the second voltage bus and electrical relays electrically coupled with the electrical fuses and further electrically coupled with electrical loads. The electronic controller may be in communication with the electrical relays and is configured to enable or disable the electrical relays.

While the example application of the BIM presented above is for use in a HEV, other embodiments of the BIM may be used in other applications requiring two voltage busses to be temporarily isolated from oner another, such as dual battery marine or motorcoach applications.

In some aspects, the techniques described herein relate to a hybrid electric vehicle powertrain, including: a first voltage bus including a first electrical power supply and a starter motor; a second voltage bus distinct from the first voltage bus including a second electrical power supply and a plurality of electrical loads; and a battery isolation module configured to configured to couple and decouple the first voltage bus and the second voltage bus based on a voltage difference between the first voltage bus and the second voltage bus.

The hybrid electric vehicle powertrain of the preceding paragraph can optionally include, additionally and/or alternatively any, one or more of the following features/steps, configurations and/or additional components.

For example, the second voltage bus may include a third electrical power supply including a DC/DC convertor electrically coupled to a fourth electrical power supply.

For example, the first electrical power supply may include a first battery having a first nominal voltage, the second electrical power supply may include a second battery having the first nominal voltage, and the fourth electrical power supply may include a third battery having a second nominal voltage that is greater than the first nominal voltage.

While the invention has been described with reference to an exemplary embodiment(s), it will be understood by those skilled in the art that various changes may be made, and equivalents may be substituted for elements thereof without departing from the scope of the invention. In addition, many modifications may be made to adapt a particular situation or material to the teachings of the invention without departing from the essential scope thereof. Therefore, it is intended that the invention is not limited to the disclosed embodiment(s), but that the invention will include all embodiments falling within the scope of the appended claims.

As used herein, 'one or more' includes a function being performed by one element, a function being performed by more than one element, e.g., in a distributed fashion, several functions being performed by one element, several functions being performed by several elements, or any combination of the above.

It will also be understood that, although the terms first, second, etc. are, in some instances, used herein to describe various elements, these elements should not be limited by these terms. These terms are only used to distinguish one element from another. For example, a first contact could be termed a second contact, and, similarly, a second contact could be termed a first contact, without departing from the scope of the various described embodiments. The first contact and the second contact are both contacts, but they are not the same contact.

The terminology used in the description of the various described embodiments herein is for the purpose of describing particular embodiments only and is not intended to be limiting. As used in the description of the various described embodiments and the appended claims, the singular forms "a", "an" and "the" are intended to include the plural forms as well, unless the context clearly indicates otherwise. It will also be understood that the term "and/or" as used herein refers to and encompasses any and all possible combinations of one or more of the associated listed items. It will be further understood that the terms "includes," "including," "comprises," and/or "comprising," when used in this specification, specify the presence of stated features, integers, steps, operations, elements, and/or components, but do not preclude the presence or addition of one or more other features, integers, steps, operations, elements, components, and/or groups thereof.

As used herein, the term "if" is, optionally, construed to mean "when" or "upon" or "in response to determining" or "in response to detecting," depending on the context. Similarly, the phrase "if it is determined" or "if [a stated condition or event] is detected" is, optionally, construed to mean "upon determining" or "in response to determining" or "upon detecting [the stated condition or event]" or "in response to detecting [the stated condition or event]," depending on the context.

Additionally, while terms of ordinance or orientation may be used herein these elements should not be limited by these terms. All terms of ordinance or orientation, unless stated otherwise, are used for purposes distinguishing one element from another, and do not denote any particular order, order of operations, direction or orientation unless stated otherwise.
In the following, preferred embodiments are described to facilitate underatanding:
Embodiment 1. An electronic module (100), comprising:
   an electronically controlled switch (102) configured to couple and decouple a first voltage bus (104) and a second voltage bus (106) distinct from the first voltage bus (104);
   a sensor (108) configured to detect a first voltage of the first voltage bus (104) and a second voltage of the second voltage bus (106); and
   an electronic controller (110) in communication with the electronically controlled switch (102) and the sensor (108), the electronic controller (110) configured to command the electronically controlled switch (102) to couple or decouple the first voltage bus (104) and the second voltage bus (106) based on a voltage difference between the first voltage and the second voltage detected by the sensor (108).
Embodiment 2. The electronic module (100) in accordance with Embodiment 1, wherein the electronic controller (110) is configured to command the electronically controlled switch (102) to couple the first voltage bus (104) and the second voltage bus (106) when the first voltage is greater than or equal to the second voltage and to decouple the first voltage bus (104) from the second voltage bus (106) via the electronically controlled switch (102) when the first voltage is less than the second voltage.
Embodiment 3. The electronic module (100) in accordance with Embodiment 2, wherein the electronic controller (110), in cooperation with the sensor (108), causes the electronically controlled switch (102) to prevent current from flowing from the second voltage bus (106) to the first voltage bus (104).
Embodiment 4. The electronic module (100) in accordance with any one of the preceding Embodiments, wherein the electronic controller (110) is configured to command the electronically controlled switch (102) to couple the first voltage bus (104) to the second voltage bus (106) in response to a first signal received from an external electronic controller (114) and wherein the electronic controller (110) is configured to command the electronically controlled switch (102) to decouple the first voltage bus (104) from the second voltage bus (106) in response to a second signal received from the external electronic controller (114).
Embodiment 5. The electronic module (100) in accordance with Embodiment 4, wherein the external electronic controller (114) is a component of a powertrain control module (PCM).
Embodiment 6. The electronic module (100) in accordance with Embodiment 4 or 5, wherein the first signal and the second signal are pulse width modulated (PWM) signals received from the external electronic controller (114).
Embodiment 7. The electronic module (100) in accordance with any one of Embodiments 4 to 6, further comprising a communication bus transceiver (112) in communication with the electronic controller (110) configured to allow electronic communication between the electronic controller (110) and the external electronic controller (114).
Embodiment 8. The electronic module (100) in accordance with Embodiment 7, wherein the first signal and the second signal are received from the external electronic controller (114) via the communication bus transceiver (112).
Embodiment 9. The electronic module (100) in accordance with Embodiment 7 or 8, wherein the communication bus transceiver (112) supports Local Interconnect Network (LIN) communication protocols.
Embodiment 10. The electronic module (100) in accordance with any one of Embodiments 7 to 9, wherein the communication bus transceiver (112) supports Controller Area Network (CAN) communication protocols.
Embodiment 11. The electronic module (100) in accordance with any one of Embodiments 4 to 10, wherein a powertrain control module comprises the external electronic controller (114).
Embodiment 12. The electronic module (100) in accordance with any one of the preceding Embodiments, wherein the electronically controlled switch (102) comprises a metal-oxide-silicon field effect transistor (MOSFET).
Embodiment 13. The electronic module (100) in accordance with any one of the preceding Embodiments, wherein the electronically controlled switch (102) comprises an integrated gate bipolar transistor (IGBT).
Embodiment 14. The electronic module (100) in accordance with any one of the preceding Embodiments, wherein the electronic module comprises a battery isolation module and wherein the first voltage bus (104) is supplied by a first battery having the first voltage and the second voltage bus (106) is supplied by a second battery having the second voltage.
Embodiment 15. The electronic module (100) in accordance with any one of the preceding Embodiments, wherein the first voltage bus (104) is supplied by a first battery having the first voltage and the second voltage bus (106) is supplied by a DC/DC convertor (208) having the second voltage.
Embodiment 16. The electronic module (100) in accordance with Embodiment 15, wherein the first voltage bus (104) is electrically coupled with a starter motor (202) of an internal combustion engine and the first battery is configured to supply electrical power to the starter motor (202).
Embodiment 17. The electronic module (100) in accordance with any one of the preceding Embodiments, wherein the electronic module is configured to be incorporated within an electrical power distribution center which further comprises:
   electrical fuses electrically coupled with the first voltage bus (104) or the second voltage bus (106); and
   electrical relays electrically coupled with the electrical fuses and further electrically coupled with electrical loads, wherein the electronic controller (110) is in communication with the electrical relays and is configured to enable or disable the electrical relays.
Embodiment 18. A hybrid electric vehicle powertrain, comprising:
   a first voltage bus (104) comprising a first electrical power supply (204) and a starter motor (202);
   a second voltage bus (106) distinct from the first voltage bus (104) comprising a second electrical power supply (212) and a plurality of electrical loads (206); and
   a battery isolation module (100) configured to configured to couple and decouple the first voltage bus (104) and the second voltage bus (106) based on a voltage difference between the first voltage bus (104) and the second voltage bus (106).
Embodiment 19. The hybrid electric vehicle powertrain in accordance with Embodiment 18, wherein the second voltage bus (106) comprises a third electrical power supply (208) including a DC/DC convertor (208) electrically coupled to a fourth electrical power supply (212).
Embodiment 20. The hybrid electric vehicle powertrain in accordance with Embodiment 19, wherein the first electrical power supply (204) comprises a first battery having a first nominal voltage, the second electrical power supply (212) comprises a second battery having the first nominal voltage, and the fourth electrical power supply (210) comprises a third battery having a second nominal voltage that is greater than the first nominal voltage.

## Claims

1. An electronic module (100), comprising:
an electronically controlled switch (102) configured to couple and decouple a first voltage bus (104) and a second voltage bus (106) distinct from the first voltage bus (104);
a sensor (108) configured to detect a first voltage of the first voltage bus (104) and a second voltage of the second voltage bus (106); and
an electronic controller (110) in communication with the electronically controlled switch (102) and the sensor (108), the electronic controller (110) configured to command the electronically controlled switch (102) to couple or decouple the first voltage bus (104) and the second voltage bus (106) based on a voltage difference between the first voltage and the second voltage detected by the sensor (108).

2. The electronic module (100) in accordance with claim 1, wherein the electronic controller (110) is configured to command the electronically controlled switch (102) to couple the first voltage bus (104) and the second voltage bus (106) when the first voltage is greater than or equal to the second voltage and to decouple the first voltage bus (104) from the second voltage bus (106) via the electronically controlled switch (102) when the first voltage is less than the second voltage,
and wherein preferably the electronic controller (110), in cooperation with the sensor (108), causes the electronically controlled switch (102) to prevent current from flowing from the second voltage bus (106) to the first voltage bus (104).

3. The electronic module (100) in accordance with any one of the preceding claims, wherein the electronic controller (110) is configured to command the electronically controlled switch (102) to couple the first voltage bus (104) to the second voltage bus (106) in response to a first signal received from an external electronic controller (114) and wherein the electronic controller (110) is configured to command the electronically controlled switch (102) to decouple the first voltage bus (104) from the second voltage bus (106) in response to a second signal received from the external electronic controller (114), wherein preferably the external electronic controller (114) is a component of a powertrain control module (PCM).

4. The electronic module (100) in accordance with claim 3, wherein the first signal and the second signal are pulse width modulated (PWM) signals received from the external electronic controller (114).

5. The electronic module (100) in accordance with any one of claims 3 to 4, further comprising a communication bus transceiver (112) in communication with the electronic controller (110) configured to allow electronic communication between the electronic controller (110) and the external electronic controller (114).

6. The electronic module (100) in accordance with claim 5, wherein the first signal and the second signal are received from the external electronic controller (114) via the communication bus transceiver (112).

7. The electronic module (100) in accordance with claim 5 or 6, wherein the communication bus transceiver (112) supports Local Interconnect Network (LIN) communication protocols.

8. The electronic module (100) in accordance with any one of claims 5 to 7, wherein the communication bus transceiver (112) supports Controller Area Network (CAN) communication protocols.

9. The electronic module (100) in accordance with any one of claims 3 to 8, wherein a powertrain control module comprises the external electronic controller (114).

10. The electronic module (100) in accordance with any one of the preceding claims, wherein the electronically controlled switch (102) comprises a metal-oxide-silicon field effect transistor (MOSFET), and/or wherein the electronically controlled switch (102) comprises an integrated gate bipolar transistor (IGBT).

11. The electronic module (100) in accordance with any one of the preceding claims, wherein the electronic module comprises a battery isolation module and wherein the first voltage bus (104) is supplied by a first battery having the first voltage and the second voltage bus (106) is supplied by a second battery having the second voltage.

12. The electronic module (100) in accordance with any one of the preceding claims, wherein the first voltage bus (104) is supplied by a first battery having the first voltage and the second voltage bus (106) is supplied by a DC/DC convertor (208) having the second voltage, wherein preferably the first voltage bus (104) is electrically coupled with a starter motor (202) of an internal combustion engine and the first battery is configured to supply electrical power to the starter motor (202).

13. The electronic module (100) in accordance with any one of the preceding claims, wherein the electronic module is configured to be incorporated within an electrical power distribution center which further comprises:
electrical fuses electrically coupled with the first voltage bus (104) or the second voltage bus (106); and
electrical relays electrically coupled with the electrical fuses and further electrically coupled with electrical loads, wherein the electronic controller (110) is in communication with the electrical relays and is configured to enable or disable the electrical relays.

14. A hybrid electric vehicle powertrain, comprising:
a first voltage bus (104) comprising a first electrical power supply (204) and a starter motor (202);
a second voltage bus (106) distinct from the first voltage bus (104) comprising a second electrical power supply (212) and a plurality of electrical loads (206); and
a battery isolation module (100) configured to configured to couple and decouple the first voltage bus (104) and the second voltage bus (106) based on a voltage difference between the first voltage bus (104) and the second voltage bus (106).

15. The hybrid electric vehicle powertrain in accordance with claim 14, wherein the second voltage bus (106) comprises a third electrical power supply (208) including a DC/DC convertor (208) electrically coupled to a fourth electrical power supply (212), wherein preferably the first electrical power supply (204) comprises a first battery having a first nominal voltage, the second electrical power supply (212) comprises a second battery having the first nominal voltage, and the fourth electrical power supply (210) comprises a third battery having a second nominal voltage that is greater than the first nominal voltage.
